# EUROPEAN PATENT APPLICATION

(11) **EP 2 642 656 A1**
(43) Date of publication of application: **25.09.2013**
(21) Application number: 11842408.4
(22) Date of filing: 17.03.2011
(51) Int. Cl.: H02M 7/48, H01G 2/16, H02H 7/122

(54) **STRUCTURE FOR OUTPUT-STAGE FILM CAPACITOR IN POWER CONDITIONER**

(30) Priority: 16.11.2010 JP 2010256323
(71) Applicant: Omron Corporation, Kyoto-shi, Kyoto 600-8530 (JP)
(72) Inventor: TANABE, Katsutaka, Kyoto-shi, Kyoto 600-8530 (JP); HARADA, Yusaku, Kyoto-shi, Kyoto 600-8530 (JP); TOYOURA, Nobuyuki, Kyoto-shi, Kyoto 600-8530 (JP)
(74) Representative: Lahrtz, Fritz
(86) International application number: PCT/JP2011/056440
(87) International publication number: WO 2012/066799

(57) **Abstract**

The present invention has a film capacitor element (6A) as a low-pass filter for blocking off high-frequency waves generated by an inverter circuit (5), the film capacitor element being disposed between the inverter circuit (5) for converting the DC power of a power supply (1) to AC power and outputting the AC power, and an interlinking relay (7) for blocking interlinking connections between the power supply (1) and a system power supply (4). In this case, the temperature of the film capacitor element (6A) is detected by directly connecting a temperature fuse (16) to the film capacitor element (6A).

## Description

### TECHNICAL FIELD

The present invention relates to a structure for an output-stage film capacitor having a film capacitor element as a low-pass filter for blocking off high-frequency waves generated by an inverter circuit, the film capacitor element being disposed between the inverter circuit for converting a DC power of a power supply to an AC power and outputting the AC power, and an interlinking relay for blocking an interlinking connection between a power supply and a system power supply, in a power conditioner that is disposed between the power supply such as a distributed power supply and the system power supply to convert the DC power from the power supply to the AC power synchronized with the system power supply.

### BACKGROUND ART

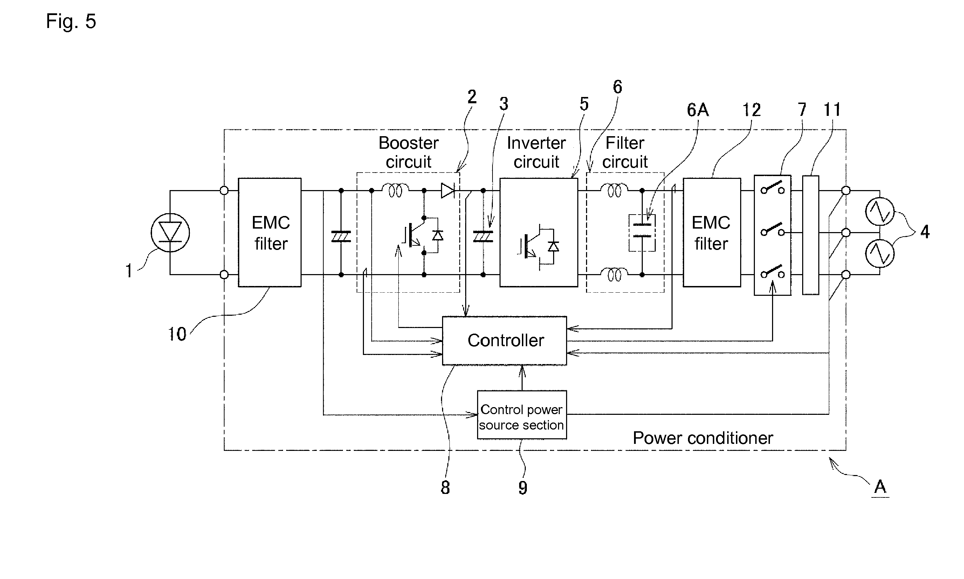

As shown in Fig. 5, a conventional power conditioner that converts a DC power from a power supply such as a distributed power supply to an AC power synchronized with a system power supply has a booster circuit 2 that boosts the DC power from a power supply 1 such as the distributed power supply, an electrolytic capacitor 3 that smoothes the DC power boosted in the booster circuit 2, an inverter circuit 5 that converts the DC power smoothed in the electrolytic capacitor 3 to the AC power synchronized with a system power supply 4, a filter circuit 6 that applies filter processing to the AC power converted in the inverter circuit 5, an interlinking relay 7 that blocks interlinking connection between the power supply 1 and the system power supply 4, a controller 8 as a CPU that controls driving of a switching element 2a inside the booster circuit 2, a switching element 5a inside the inverter circuit 5, or the interlinking relay 7, and a control power source section 9 that supplies acquired power to the controller 8 as control power, and the AC power subjected to the filter processing in the filter circuit 6 is supplied as power to a load such as a household electrical appliance.

Furthermore, the conventional power conditioner has an input-stage EMC filter 10 provided between the power supply 1 and the booster circuit 2 to block off an electromagnetic interference or the like brought from the power supply 1 and an output-stage EMC filter 12 that blocks off the electromagnetic interference or the like brought from a surge absorbing element 11 that absorbs a high voltage such as lightning surge brought from the system power supply, or from the system power supply 4 through the interlinking relay 7.

Moreover, the filter circuit 6 has a film capacitor element 6A as a low-pass filter for blocking off high-frequency waves generated by the inverter circuit 5.

Accordingly, in the conventional power conditioner, the output-stage EMC filter 12 operates as the low-pass filter and blocks off a high voltage to prevent the high voltage from entering the filter circuit 6, if the high voltage such as the lightning surge is brought to the system power supply 4 from outside or the like.

However, the output-stage EMC filter 12 cannot absorb the high-voltage any more, if the high voltage due to the lightning stroke or the like is instantly brought just near to an installation area of the power conditioner, and the instant high voltage is applied to the film capacitor element 6A of the nearby filter circuit 6, thereby causing an insulation breakdown, so that a short-circuit current flows at the insulation breakdown portion. Consequently, the film capacitor element 6A is normally constructed by vapor-depositing terminals to the both end portions of the film capacitor element formed by wrapping a film on which an aluminum foil is vapor-deposited, and thus, if the instant high voltage causes the insulation breakdown at soldered sites of the terminals appearing outside, it can be found relatively easily from its outer appearance. However, if the instant high voltage enters the inside of the film capacitor element, and causes the insulation breakdown, in addition to a state where the current from the inverter circuit 6 remains flowing, a short-circuit current flows in the film capacitor element, so that the film capacitor element is heated, and then, the heat gradually sinks into a deep portion in spite of slightly turning back to heat the film inside, thereby generating gas. If the gas stays inside without releasing the gas outside, an inner pressure of the film capacitor element disadvantageously becomes high.

As a result, the film made of synthetic resin making up the film capacitor element is destroyed, and the aluminum foils come into contact to each other, thereby causing the insulation breakdown. Moreover, in the case where the insulation breakdown is caused only in the deep portion of the film capacitor element, a user of the power conditioner can hardly find the insulation breakdown, and only a specialist such as a technical expert of a power company can find it.

Conventionally, as a countermeasure technique against a deterioration of a capacitor, there has been known, for example, a technique of determining the deterioration of a smoothing capacitor provided on a DC side of an electric power converter in an on-vehicle electric motor controller, or a technique for solving troubles involved by decrease in capacitance by the heat generation of an electrolytic capacitor that smoothes a commercial power supply after rectification in an electric power converter used in a blushless DC motor and a ventilation air blower (refer to Patent Documents 1 and 2).

Patent Document 1: Japanese Unexamined Patent Publication No. 2007-60866
Patent Document 2: Japanese Unexamined Patent Publication No. 2009-19202

In the technique described in Patent Document 1, based on a deterioration determination reference set in accordance with whether or not a predetermined performance deterioration of an automobile will be brought about by determining the deterioration of a smoothing capacitor, the deterioration of a component of the on-vehicle electric motor controller is determined to transmit the determination result to a self-diagnosis unit as the deterioration of an abnormal state information, and the deterioration of the smoothing capacitor is judged, based on a smoothing capacitor information such as an amount of a smoothing capacitor passing current from a smoothing capacitor current detector, and a smoothing capacitor temperature from a thermistor.

Moreover, in the technique described in Patent Document 2, a ripple factor of a both-end voltage of the electrolytic capacitor is sensed, and if it is determined that the ripple factor becomes a predetermined value or more, a switching operation of a switching element of an inverter is stopped, which prevents the heat generation of the electrolytic capacitor. There is provided an electric power converter in which a DC voltage obtained by smoothing/rectifying the commercial power supply by a diode and a capacitor is subjected to the switching operation by a semiconductor switching element to obtain a stepped-down DC voltage or a rectangular waveform output, wherein the ripple factor of the DC voltage is sensed, and if the ripple factor is determined to be a predetermined value or more, the operation of the electric power converter is stopped, by which the deterioration of the capacitor is sensed earlier to prevent occurrence of an abnormal heat generation and vibration/noise of the electric power converter.

However, since the technique described in Patent Document 1 is to determine the deterioration of the smoothing capacitor, based on the deterioration determination reference, and in the technique described in Patent Document 2, the deterioration of the electrolytic capacitor is determined, based on the ripple factor of the both-end voltage of the electrolytic capacitor, even when both of these techniques are used as means for preventing the above-described insulation breakdown of the film capacitor element 6A of the structure for an output-stage film capacitor in the power conditioner, the high voltage brought instantly due to a lightning stroke or the like just near the installation area of the power conditioner is not completely coped with, and the insulation breakdown of the film capacitor element 6A is caused, which generates a harmonic current due to the heat generation or the decrease in capacitance involved in the insulation deterioration.

Consequently, an object of this invention is to provide a structure for the output-stage film capacitor in a power conditioner capable of preventing generation of a high-frequency current due to the heat generation or decrease in capacitance by the insulation breakdown, even if in a film capacitor element making up the structure for the output-stage film capacitor in the power conditioner, the insulation breakdown is caused by a high voltage brought instantly due to a lightning stroke or the like just near a power conditioner installation area.

### SUMMARY OF THE INVENTION

A structure for an output-stage film capacitor in a power conditioner according to the present invention has a film capacitor element as a low-pass filter for the blocking off high-frequency waves generated by an inverter circuit, the film capacitor element being disposed between the inverter circuit for converting a DC power of a power supply to an AC power and outputting the AC power, and an interlinking relay for blocking an interlinking connection between the power supply and a system power supply, in the power conditioner disposed between the power supply such as a distributed power supply and the system power supply to convert the DC power from the power supply to the AC power synchronized with the system power supply, wherein a temperature fuse is attached directly to the film capacitor element to thereby sense a temperature of the film capacitor.

According to this invention, since the temperature fuse is attached directly to the film capacitor element to thereby sense the temperature of the film capacitor element, the temperature fuse is disconnected instantly, when the temperature of the film capacitor element reaches a predetermined temperature or higher by an insulation deterioration involved in a high voltage brought instantly due to a lightning stroke or the like just near an installation area of the power conditioner, so that no short-circuit current flows in the film capacitor element, which can prevent an abnormal breakdown of the film capacitor element. In addition, the disconnection of the temperature fuse allows a driving control circuit of the power conditioner to be opened, so that operation of the power conditioner can be safely stopped. Accordingly, even if in the film capacitor element, the insulation breakdown is caused, generation of a high-frequency current due to the heat generation or decrease in the capacitance by the insulation deterioration involved in the insulation breakdown can be prevented.

In the one embodiment of the present invention, the temperature fuse provided in the film capacitor element is arranged in series to a temperature sensor connecting circuit to which a temperature sensor is connected, the temperature sensor detecting an inner temperature of a controller that controls switching of the inverter circuit so as to cause the inverter circuit to output the AC power synchronized with the AC power of the system power supply.

According to the above-described configuration, since the temperature fuse provided in the film capacitor element is arranged in series to the temperature sensor connecting circuit to which the temperature sensor that detects the internal temperature of the controller is connected, the temperature fuse is instantly disconnected, when the temperature of the film capacitor element reaches the predetermined temperature or higher due to the insulation deterioration by the high voltage brought instantly by a lightning stroke or the like just near the power conditioner installation area. As a result, the temperature sensor connecting circuit is opened to stop the driving of the controller, and the short-circuit current does not flow in the film capacitor element any more, which can prevent the abnormal breakdown of the film capacitor element, and can safely stop the operation of the power conditioner itself.

Moreover, according to one embodiment of the present invention, the temperature fuse is attached directly to an outer surface of the film capacitor element.

According to the above-described configuration, since the temperature fuse is attached directly to the outer surface of the film capacitor element, the mounting of the temperature fuse is easy, and the temperature fuse can be applied to the existing film capacitor element.

Moreover, in one embodiment of the present invention, when the film capacitor element is formed into a substantially rectangular parallelepiped shape by wrapping a dielectric film and an electrode in a layered state, the temperature fuse is attached directly to an outer surface of a short-side forming side surface in the substantially rectangular parallelepiped film capacitor element to thereby sense a surface temperature of the film capacitor element.

According to the above-described configuration, since the short-side forming side surface in the rectangular parallelepiped film capacitor element is a folding wraparound portion of the film on which an aluminum foil is vapor-deposited, at this site, the heat generation due to the high voltage is caused more easily than at the other sites. This makes the temperature sensing function of the temperature fuse sensitive, so that the temperature fuse is disconnected at an earlier stage, and the abnormal breakdown of the film capacitor element can be surely prevented.

Moreover, in one embodiment of the present invention, the temperature fuse is attached directly to an outer surface of a long-side forming side surface in the rectangular parallelepiped film capacitor element.

According to the above-described configuration, by attaching the temperature fuse directly to the outer surface of the long-side forming side surface in addition to the short-side forming side surface, temperature change of the film capacitor element can be captured without being passed over, and the function of disconnection due to application of the high voltage can be surely fulfilled.

In one embodiment of the present invention, the outer surfaces of the film capacitor element are covered with a capacitor case, and the temperature fuse is sandwiched and supported between the capacitor case and the film capacitor element.

According to the above-described configuration, sandwiching and supporting of the temperature fuse between the capacitor case and the film capacitor element allows the temperature fuse to be mounted more easily and at low cost without performing adhesive mounting, using an adhesive, so that the temperature fuse can be applied to the existing structure for the output-stage film capacitor structure as it is.

In one embodiment of the present invention, the temperature fuse has a planar mounting surface, and the planar mounting surface is attached to the outer surface of the film capacitor element.

According to the above-described configuration, since the temperature fuse can be attached to the surface of the film capacitor element by the planer mounting surface, it can be mounted on the film capacitor element more easily and in a stable state.

This invention has been configured as described above, since the temperature fuse is attached directly to the film capacitor element to thereby sense the temperature of the film capacitor element, the temperature fuse is disconnected instantly, when the temperature of the film capacitor element reaches the predetermined temperature or higher by the high voltage brought instantly due to a lightning stroke or the like just near the installation area of the power conditioner, so that no short-circuit current flows in the film capacitor element, which can prevent the abnormal breakdown of the film capacitor element. In addition, the disconnection of the temperature fuse allows the driving control circuit of the power conditioner to be opened, so that the operation of the power conditioner can be safely stopped. Accordingly, even if in the film capacitor element, the insulation breakdown is caused, generation of a high-frequency current due to the heat generation or decrease in capacitance by the insulation deterioration involved in the insulation breakdown can be prevented.

### BRIEF DESCRIPTION OF THE DRAWINGS

Fig. 1 is a block diagram showing a schematic configuration of an inside of a distributed power supply system in a power conditioner to which a structure for an output-stage film capacitor as one embodiment of the present invention is applied.
Fig. 2 is a schematic side diagram in which a state where the output-stage film capacitor in Fig. 1 is mounted on a board is drawn.
Fig. 3 is a schematic front diagram of the output-stage film capacitor in Fig. 1.
Fig. 4 is a schematic front diagram of a duplex output-stage film capacitor as another embodiment of the present invention.
Fig. 5 is a block diagram showing a schematic configuration of an inside of a distributed power supply system in a power conditioner to which a conventional structure for output-stage film capacitor is applied.

### DETAILED DESCRIPTION OF THE DRAWINGS

The present invention is configured so as to prevent generation of a harmonic current due to a heat generation or decrease in capacitance by an insulation deterioration relating to an insulation breakdown, even if in a film capacitor element making up a structure for an output-stage film capacitor in a power conditioner, the insulation breakdown is caused by a high voltage brought instantly due to a lightning stroke or the like just near a power conditioner installation area.

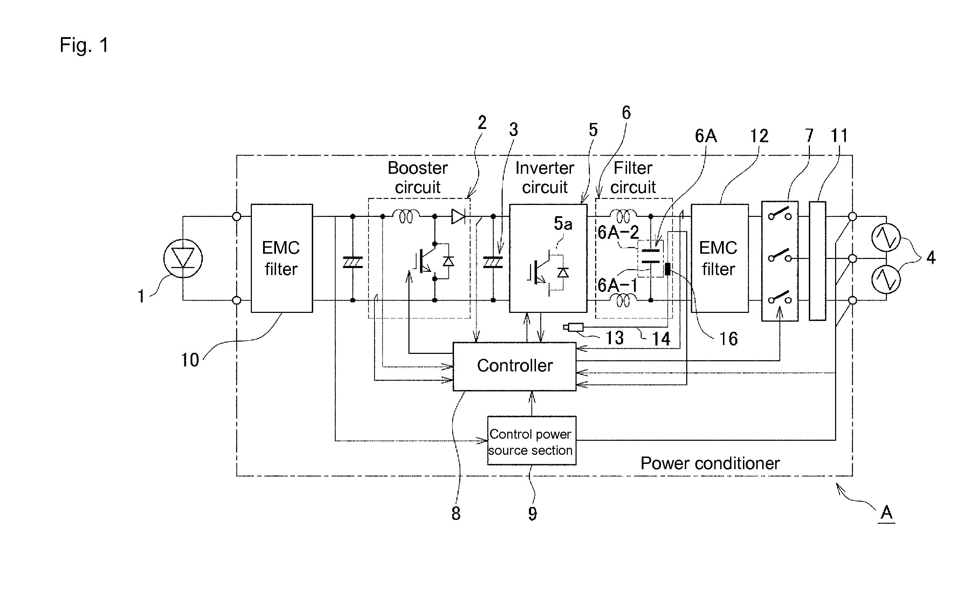

Next, a first embodiment according to the present invention will be described, using Figs. 1 to 4. In the following description, configurations corresponding to the conventional technique shown in Fig. 5 will be described with the same reference numerals.

As shown in Fig. 1, a power conditioner A that converts a DC power from a power supply such as a distributed power supply according to the first embodiment of the present invention to an AC power synchronized with a system power supply has a booster circuit 2 that boosts the DC power from a power supply 1 such as the distributed power supply, an electrolytic capacitor 3 that smoothes the DC power boosted in the booster circuit 2, an inverter circuit 5 that converts the DC power smoothed in the electrolytic capacitor 3 to the AC power synchronized with a system power supply 4, a filter circuit 6 that applies filter processing to the AC power converted in the inverter circuit 5, an interlinking relay 7 that blocks interlinking connection between the power supply 1 and the system power supply 4, a controller 8 as a CPU that controls driving of a switching element 2a inside the booster circuit 2, a switching element 5a inside the inverter circuit 5, or the interlinking relay 7, and a control power source section 9 that supplies acquired power to the controller 8 as control power, so that the AC power subjected to the filter processing in the filter circuit 6 is supplied to a load such as a household electrical appliance.

Furthermore, the power conditioner A has an input-stage EMC filter 10 provided between the power supply 1 and the booster circuit 2 to block off electromagnetic interference or the like brought from the power supply 1 and an output-stage EMC filter 12 that blocks off an electromagnetic interference or the like brought from a surge absorbing element 11 that absorbs a high voltage such as lightning surge brought from the system power supply, or from the system power supply 4 through the interlinking relay 7.

Moreover, the filter circuit 6 has a film capacitor element 6A as a low-pass filter for blocking off high-frequency waves generated by the inverter circuit 5.

Accordingly, in the power conditioner A, as in the conventional power conditioner, the output-stage EMC filter 12 operates as the low-pass filter to block off a high voltage to prevent the high voltage from entering the filter circuit 6, if the high voltage such as the lightning surge is brought to the system power supply 4 from outside, or the like.

Moreover, the power conditioner A has a temperature sensor, for example, a thermistor 13 that detects an internal temperature of the controller 8 that controls the switching of the inverter circuit 5 so as to cause the inverter circuit 5 to output the AC power synchronized with the AC power of the system power supply, and the thermistor 13 is connected to the controller 8 through a temperature sensor connecting circuit 14.

Furthermore, the film capacitor element 6A making up the filter circuit 6 is formed into a substantially rectangular parallelepiped shape in a state where a dielectric film made by vapor-depositing an aluminum foil on a film made of synthetic resin is wrapped several times in a loop shape, electrode terminals 6A-1 are vapor-deposited to both end portions of the dielectric film, respectively, and the film capacitor element 6A is housed in a capacitor case 6A-2 made of, for example, synthetic resin in a state where the pair of electrode terminals 6A-1 appears outside. The respective electrode terminals 6A-1 are mounted on an electrode pattern of a printed board 15.

A plurality of temperature fuses 16 are attached directly to surfaces of the substantially rectangular parallelepiped film capacitor element 6A. An outer portion of each of the temperature fuses 16 forms a planar mounting surface 16a, and while each of the temperature fuses 16 may be attached directly to a side surface portion of the film capacitor element 6A with an adhesive or the like, in this embodiment, it may be attached directly to the film capacitor element 6A in a state where it is sandwiched and supported between the surface of the film capacitor element 6A and an inner surface of the capacitor case 6A-2. Obviously, since each of the temperature fuses 16 senses the temperature of the film capacitor element 6A and is activated, it may be attached directly inside the film capacitor element 6A.

As to an arrangement configuration of the temperature fuses 16 to the film capacitor elements 6A, the temperature fuses 16 are attached directly to at least short-side forming side surfaces 6a in the rectangular parallelepiped film capacitor element 6A. The above-described short-side forming side surfaces 6a correspond to the folding wraparoud portions of the dielectric film wrapped in the loop shape, and at these sites, the heat generation due to high voltage is caused more easily than at the other sites.

Furthermore, the temperature fuses 16 are also attached directly to long-side forming side surfaces 6b in the substantially rectangular parallelepiped film capacitor element 6A, so that a temperature rise due to the high voltage of the film capacitor element 6A can be surely sensed.

As shown in Fig. 1, each of the temperature fuses is arranged in series to the temperature sensor connecting circuit 14 to which the thermistor 13 as the temperature sensor is connected, the temperature sensor detecting the internal temperature of the controller 8 that controls the switching operation of the inverter circuit 5 so as to cause the inverter circuit 5 to output the AC power synchronized with the AC power of the system power supply 4.

In the first embodiment according to the present invention having the above-described configuration, since the temperature fuses 16 are attached directly to the film capacitor element 6A to thereby sense the temperature of the film capacitor element 6A, the temperature fuses are disconnected instantly, when the temperature of the film capacitor element 6A reaches a predetermined temperature or higher by the high voltage brought instantly due to a lightning stroke or the like just near the installation area of the power conditioner A. Thereby, no short-circuit current flows in the film capacitor element 6A, which can prevent the abnormal breakdown of the film capacitor element 6A, and since the disconnection of the temperature fuses makes the temperature sensor connecting circuit 14 open, as a result, a driving control circuit of the power conditioner A can be opened, so that the operation of the power conditioner A can be safely stopped.

That is, according to the configuration of the first embodiment, the instant disconnection of the temperature fuses 16 to which the high voltage is applied makes the temperature sensor connecting circuit 14 open to stop the driving of the controller 8, so that the short-circuit current does not flow in the film capacitor element 6A any more, which can prevent the abnormal breakdown of the film capacitor element 6A, and can safely stop the operation of the power conditioner A itself.

Moreover, according to the first embodiment having the above-described configuration, since the temperature fuses 16 are attached directly to the short-side forming side surfaces 6a and the long-side forming side surfaces 6b, which are the outer surfaces of the film capacitor element 6A, the mounting of the temperature fuses 16 is easy, and the temperature fuses 16 can also be applied to the existing film capacitor element 6A.

Furthermore, according to the first embodiment having the above-described configuration, since the short-side forming side surfaces 6a in the substantially rectangular parallelepiped film capacitor element 6A are the folding wraparound portions of the film on which the aluminum foil is vapor-deposited, at these sites, the heat generation due to the high voltage is caused more easily than at the other sites, for example, at the long-side forming side surfaces 6b. This makes the temperature sensing function by the temperature fuses 16 sensitive, thereby disconnecting the temperature fuses at earlier stages, so that the abnormal breakdown of the film capacitor element 6A can be more surely prevented.

According to the first embodiment having the above-described configuration, the temperature fuses 16 are attached directly to the outer surfaces of the long-side forming side surface 6b in addition to the short-side forming side surfaces 6a, which enables temperature change of the film capacitor element 6A to be captured without being passed over, so that the function of the disconnection due to application of the high voltage can be surely fulfilled. As a result, even if the insulation breakdown is caused in the film capacitor element 6A, the generation of the high-frequency current due to the heat generation or the decrease in capacitance by the insulation deterioration involved in the above-described insulation breakdown can be prevented.

Moreover, according to the first embodiment having the above-described configuration, the temperature fuses 16 each have the planar mounting surface 16a, which enables the planar mounting surfaces 16a to be attached to the outer surfaces of the film capacitor element 6A, so that the temperature fuses 16 can be mounted on the film capacitor element 6A more easily in a stable state.

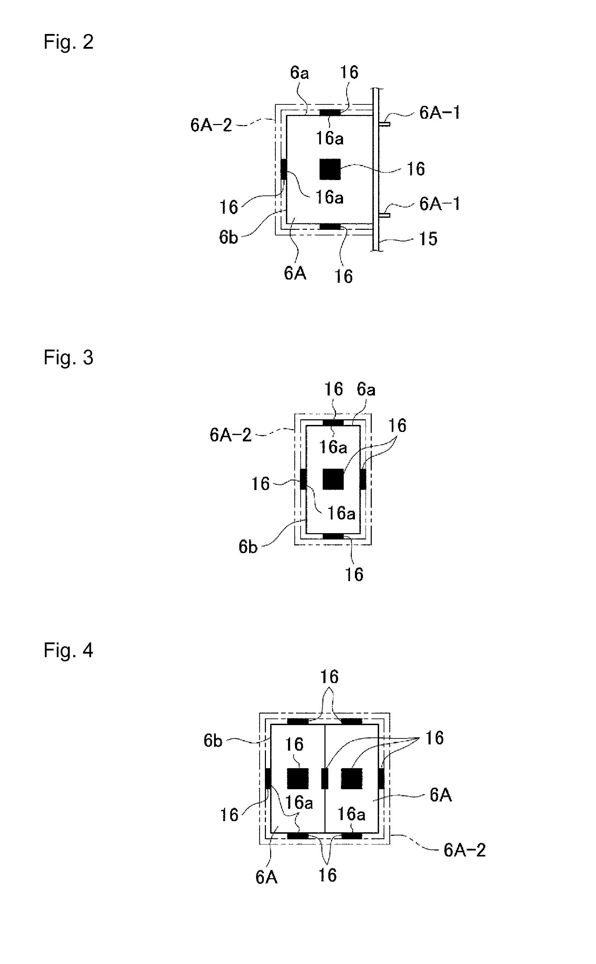

The second embodiment of the present invention has been described using Fig. 4 According to Fig. 4, the second embodiment has a configuration similar to that of the first embodiment, in which the temperature fuses 16 are attached directly to the short-side forming side surfaces 6a and the long-side forming side surfaces 6b of film capacitor elements 6A and the like, except that, for example, the two film capacitor elements 6A are housed in a capacitor case 6A-2 in a state where one-side surfaces thereof are caused to abut on each other in order to increase a capacitor capacitance, and that one of the temperature fuses 16 is sandwiched and installed between both the side surfaces abutting on each other. Moreover, as in the first embodiment, the temperature fuses 16 are connected in series into a temperature sensor connecting circuit 14 in a power conditioner A.

Accordingly, in the second embodiment, as in the first embodiment, since the temperature fuses 16 are attached directly to the film capacitor element 6A to thereby sense temperature of the film capacitor element 6A, the temperature fuses are instantly disconnected, when the temperature of the film capacitor element 6A reaches a predetermined temperature or higher by a high voltage brought instantly due to a lightning stroke or the like just near an installation area of the power conditioner A, so that no short-circuit current flows in the film capacitor element 6A, which can prevent the abnormal breakdown of the film capacitor element 6A. In addition, the disconnection of the temperature fuses makes the temperature sensor connecting circuit 14 open, and as a result, a driving control circuit of the power conditioner A can be opened, so that the operation of the power conditioner A can be safely stopped.

That is, according to the configuration of the second embodiment as well, the instant disconnection of the temperature fuses 16 to which the high voltage is applied makes the temperature sensor connecting circuit 14 open to stop the driving of the controller 8, and the short-circuit current does not flow in the film capacitor element 6A any more, which can prevent the abnormal breakdown of the film capacitor element 6A and can safely stop the operation of the power conditioner A itself.

Moreover, according to the second embodiment having the above-described configuration as well, since the temperature fuses 16 are attached directly to the short-side forming side surfaces 6a and the long-side forming side surfaces 6b, which are the outer surfaces of the film capacitor element 6A, the mounting of the temperature fuses 16 is easy, and the temperature fuses 16 can also be applied to the existing film capacitor element 6A.

Furthermore, according to the second embodiment having the above-described configuration as well, since the short-side forming side surfaces 6a in the substantially rectangular parallelepiped film capacitor element 6A are folding wraparound portions of a film on which an aluminum foil is vapor-deposited, at these sites, the heat generation due to the high voltage is caused more easily than at the other sites, for example, the long-side forming side surfaces 6b. This makes the temperature sensing function by the temperature fuses 16 sensitive, thereby disconnecting the temperature fuses at earlier stages, so that the abnormal breakdown of the film capacitor element 6A can be more surely prevented. As a result, even if the insulation breakdown is caused in the film capacitor element 6A, generation of a high-frequency current due to the heat generation or decrease in capacitance by the insulation deterioration involved in the above-described insulation breakdown can be prevented.

According to the second embodiment having the above-described configuration as well, the temperature fuses 16 are attached directly to the outer surfaces of the long-side forming side surface 6b in addition to the short-side forming side surfaces 6a, which enables temperature change of the film capacitor element 6A to be captured without being passed over, and the function of the disconnection due to application of the high voltage can be surely fulfilled.

Moreover, according to the second embodiment having the above-described configuration as well, the temperature fuses 16 each have the planar mounting surface 16a, which enables the planar mounting surfaces 16a to be attached to the outer surfaces of the film capacitor element 6A, so that the temperature fuses 16 can be mounted on the film capacitor element 6A more easily in a stable state.

Furthermore, housing the two film capacitor elements 6A inside the capacitor case 6A-2 can increase a surface area of the capacitor case 6A-2, and as compared with a case where the two film capacitor elements 6A are housed in the individual capacitor cases 6A-2, the temperature fuses 16 sandwiched and supported between the capacitor case 6A-2 and the film capacitor element 6A are supported firmly.

As described above, in this invention, since the temperature fuses are attached directly to the film capacitor element to thereby sense the temperature of the film capacitor element, the temperature fuses are disconnected instantly, when the temperature of the film capacitor element reaches the predetermined temperature or higher by the high voltage brought instantly due to a lightning stroke or the like just near the installation area of the power conditioner, so that no short-circuit current flows in the film capacitor element, which can prevent the abnormal breakdown of the film capacitor element. In addition, the disconnection of the temperature fuses allows the driving control circuit of the power conditioner to be opened, so that the operation of the power conditioner can be safely stopped. As a result, even if the insulation breakdown is caused in the film capacitor element, the generation of the high-frequency current due to the heat generation or the decrease in capacitance by the insulation deterioration involved in the above-described insulation breakdown can be prevented.

Accordingly, this invention is preferable as a structure for an output-stage film capacitor or the like, the structure having a film capacitor element as a low-pass filter for blocking off high-frequency waves generated by an inverter circuit, the film capacitor element being disposed between the inverter circuit for converting a DC power of a power supply to an AC power and outputting the AC power, and an interlinking relay for blocking interlinking connection between the power supply and a system power supply, in a power conditioner disposed between the power supply such as a distributed power supply and the system power supply to convert the DC power from the power supply to the AC power synchronized with the system power supply.

### DESCRIPTION OF SYMBOLS

- 1: Power supply
- 2: Booster circuit
- 3: Electrolytic capacitor
- 4: System power supply
- 5: Inverter circuit
- 6: Filter circuit
- 6A: Film capacitor element
- 6A-2: Capacitor case
- 6a: Short-side forming side surface
- 6b: Long-side forming side surface
- 7: Interlinking relay
- 8: Controller
- 13: Thermistor (Temperature sensor)
- 14: Temperature sensor connecting circuit
- 16: Temperature fuse
- 16a: Planar mounting surface

## Claims

1. A structure for an output-stage film capacitor in a power conditioner, the structure having a film capacitor (6A) element as a low-pass filter for blocking off high-frequency waves generated by an inverter circuit (5), the film capacitor element being disposed between the inverter circuit (5) for converting a DC power of a power supply (1) to an AC power and outputting the AC power, and an interlinking relay (7) for blocking interlinking connection between the power supply (1) and a system power supply (4), in the power conditioner disposed between the power supply(1) such as a distributed power supply and the system power supply (4) to convert the DC power from the power supply to the AC power synchronized with the system power supply (4), wherein a temperature fuse (16) is attached directly to the film capacitor (6A) element to thereby sense a temperature of the film capacitor element (6A).

2. The structure for the output-stage film capacitor in the power conditioner according to claim 1, wherein the temperature fuse (16) provided in the film capacitor element (6A) is arranged in series to a temperature sensor connecting circuit (14) to which a temperature sensor (13) is connected, the temperature sensor (13) detecting an inner temperature of a controller (8) that controls switching of the inverter circuit (5) so as to cause the inverter circuit (5) to output the AC power synchronized with the AC power of the system power supply (4).

3. The structure for the output-stage film capacitor in the power conditioner according to claim 1 or claim 2, wherein the temperature fuse (16) is attached directly to an outer surface of the film capacitor element (6A).

4. The structure for the output-stage film capacitor in the power conditioner according to claim 3, wherein when the film capacitor (6A) element is formed into a substantially rectangular parallelepiped shape by wrapping a dielectric film and an electrode in a layered state, the temperature fuse (16) is attached directly to an outer surface of a short-side forming side surface (6a) in the substantially rectangular parallelepiped film capacitor element (6A) to thereby sense a surface temperature of the film capacitor element (6A).

5. The structure for the output-stage film capacitor in the power conditioner according to claim 4, wherein the temperature fuse (16) is attached directly to an outer surface of a long-side forming side surface (6b) in the rectangular parallelepiped film capacitor element (6A).

6. The structure for the output-stage film capacitor in the power conditioner according to claim 4 or claim 5, wherein the outer surfaces of the film capacitor element (6A) are covered with a capacitor case (6A-2), and the temperature fuse (16) is sandwiched between the capacitor cover (6A-2 )and the film capacitor element (6A).

7. The structure for the output-stage film capacitor in the power conditioner according to any one of claims 1 to 6, wherein the temperature fuse (16) has a planar mounting surface (16a), and the planar mounting surface (16a) is attached to the outer surface of the film capacitor element (6A).
